# DEMANDE DE BREVET EUROPEEN

(11) **EP 1 013 976 A2**
(43) Date de publication de la demande: **28.06.2000**
(21) Numéro de dépôt: 99811130.6
(22) Date de dépôt: 09.12.1999
(51) Int. Cl.: F16K 5/06, B05B 1/30

(54) **Tuyau de douche**

(30) Priorité: 21.12.1998 CH 251498; 15.01.1999 CH 7499; 02.11.1999 CH 200499
(71) Demandeur: Fentrouci, Hasnne, 8048 Zürich (CH)
(72) Inventeur: Fentrouci, Hasnne, 8048 Zürich (CH)

(57) **Abrégé**

Le tuyau de douche comprend un flexible (1) avec une vanne à deux voies (3) incorporée au flexible de façon à pouvoir interrompre partiellement ou complètement l'écoulement de l'eau par l'action mécanique d'un organe d'actionnement (2). Ledit organe d'actionnement (2) est un levier arqué, amené en position de repos par un ressort de rappel (15), avec une tige (7) fixé au clapet rotatif (9) passant par un passage de forme correspondante du noyau (4).

Lorsque le corps de vanne (3) est inséré dans un logement d'un support mural de douche aux dimensions intérieures correspondantes aux dimensions extérieures du corps, l'organe d'actionnement est tourné de 90° entraînant en rotation le clapet afin de fermer partiellement ou complètement ladite vanne pour économiser l'eau lors d'une prise d'une douche.

## Description

L'invention concerne un tuyau de douche constitué d'un flexible et d'une vanne à deux voies qui comprend un corps à l'intérieur duquel est logé une partie d'un noyau traversé par un conduit rectiligne reliant l'entrée et la sortie de la vanne pour le passage de l'eau. La vanne servant à interrompre partiellement ou complètement le flux de l'eau afin d'économiser l'eau lorsque l'on prend une douche sans devoir agir sur les robinets d'eau froide et chaude ou sur un levier d'un robinet mélangeur d'eau chaude ou froide qui sont disposés sur les moyens d'alimentation en eau sanitaire.

On connaît déjà des dispositifs d'interruption de l'écoulement de l'eau lors d'une douche qui sont soit incorporés au manche d'une pomme de douche ou en tant que pièce de raccord notamment entre une pomme de douche et le flexible de douche.

On peut citer le brevet français FR 1288584 qui décrit une pomme de douche avec un manche comprenant un robinet constitué d'une manette, d'un piston, d'une pièce poussée par un ressort en position de repos contre une ouverture entre une chambre d'entrée et une chambre de sortie du robinet interrompant l'écoulement de l'eau, les deux chambres étant notamment placées l'une en dessus de l'autre de façon perpendiculaire à l'axe longitudinal du manche. Une pression sur la manette entraînant le piston dans la chambre de sortie de l'eau permet de pousser la pièce et ainsi d'ouvrir le robinet pour le passage de l'eau.

Le brevet français FR 2701532 décrit un robinet additionnel pour douche, c'est-à-dire un raccord à connecter, par exemple par vissage, entre l'extrémité du flexible et le manche de la pomme de douche. Ledit robinet comprend notamment un obturateur transversal à un conduit d'écoulement d'eau et un organe de manoeuvre sous forme de levier monté à pivotement sur le corps du robinet. Une pression sur le levier impose un déplacement de l'obturateur dans une position où il autorise le passage de l'eau dans le conduit. Ce raccord permet également d'économiser de l'eau lorsque l'on prend une douche.

Le document de brevet WO 8002120 décrit une douche à main comprenant un obturateur incorporé à la poignée. L'obturateur est constitué d'un piston à action manuelle coulissant dans un logement traversant de part en part la poignée. Le piston est terminé de chaque côté par des butées de façon à bien définir deux positions extrêmes de manoeuvre. Une partie dudit piston présente une gorge circulaire de façon à permettre le passage de l'eau dans un conduit lorsque cette gorge est positionnée dans ledit conduit. Cette disposition de l'obturateur dans la poignée de douche que l'on peut raccorder au flexible est également dans le but d'économiser lors d'une douche. Un robinet mélangeur à l'autre extrémité du flexible permet de régler initialement la température de l'eau que l'on souhaite garder pendant toute la douche.

Le brevet US 3722800 décrit une vanne pour diriger l'eau provenant de moyens d'alimentation en eau sanitaire soit dans une pomme de douche placée en hauteur et rigidement liée au mur par l'intermédiaire de ladite vanne, soit dans un flexible terminé par une pomme de douche à poignée pouvant être tenue d'une seule main. Cette vanne est à trois voies, c'est-à-dire qu'elle comprend une entrée et deux sorties. Cette vanne ne permet pas d'interrompre l'écoulement de l'eau, mais seulement de l'aiguiller dans l'une ou l'autre sortie. L'élément d'aiguillage de l'eau est un piston agissant transversalement par pression manuelle entre deux positions extrêmes. Cet élément a deux secteurs à gorge circulaire pour l'écoulement de l'eau dans une ou l'autre des sorties séparés par un cloisonnement central. Dans ce document, il est présenté également une pomme de douche à poignée sur laquelle est montée une autre vanne actionnable par un levier pivotant sur l'extérieur de la poignée. En position de repos ladite vanne de la poignée est fermée. Elle ne s'ouvre que lorsque le levier est pressé manuellement, ceci afin d'économiser de l'eau.

Le brevet US 4191332 définit un raccord à vanne se plaçant entre les moyens d'alimentation en eau sanitaire et une pomme de douche. Ledit raccord est constitué d'une vanne du même principe que celui décrit dans le document WO 8002120 et ne sera pas expliqué plus en détail.

Tous ces documents cités présentent bien des moyens d'interruption de l'écoulement de l'eau ou d'aiguillage de l'eau, mais tous définissent une vanne à l'état fermé sans action manuelle sur un organe d'actionnement.

Un but que se propose de résoudre l'invention est de pallier aux inconvénients des dispositifs économiseurs d'eau cités ci-devant et de pouvoir incorporer une vanne au flexible de douche au moment de sa fabrication.

Le but de l'invention, ainsi que d'autres, est atteint grâce au tuyau de douche comme indiqué ci-dessus qui se caractérise en ce que la vanne est reliée de façon indémontable à l'extrémité du flexible côté pomme de douche, en ce que ladite vanne comprend un clapet pivotant à l'intérieur du conduit du noyau selon un axe de rotation perpendiculaire à la direction d'écoulement de l'eau, ledit clapet comprenant dans sa masse une ouverture traversante pour le passage de l'eau dans une position d'ouverture, un organe d'actionnement mécanique du clapet pour tourner ledit clapet dans le conduit du noyau dans une position de fermeture lors d'une commande d'interruption partielle ou complète d'écoulement de l'eau, en position de repos de l'organe d'actionnement l'eau pouvant passer librement au travers du conduit du noyau entre l'entrée et la sortie de la vanne par l'ouverture traversante du clapet, le tuyau de douche au niveau de la vanne étant destiné à être inséré en utilisation dans un logement d'un support mural de douche dont les dimensions intérieures correspondent aux dimensions extérieures du corps de ladite vanne afin d'imposer à l'organe d'actionnement un mouvement de rotation pour faire tourner le clapet dans une position de fermeture pour interrompre partiellement ou complètement l'écoulement de l'eau.

Un avantage du tuyau de douche consiste en ce qu'il est muni d'un dispositif d'interruption partielle ou complète de l'écoulement de l'eau. Le dispositif est fabriqué de manière indémontable du flexible. L'écoulement de l'eau restera toujours possible si aucune action manuelle n'est opérée sur l'organe d'actionnement de ladite vanne. L'interruption de l'écoulement interviendra au moment où on l'insère sur un support aux dimensions correspondantes afin d'agir sur l'organe d'actionnement qui interrompra ledit écoulement.

Ledit tuyau objet de l'invention pourra être utilisé dans des hôtels par exemple de façon à économiser l'eau lors de la prise d'une douche. De plus comme la vanne est incorporée au flexible, cela peut éviter aux clients de l'hôtel de dérober ledit tuyau, ce qui aurait été plus facile pour le cas d'un raccord ajouté audit flexible ou pour le cas d'une pomme de douche avec un tel dispositif.

L'invention sera mieux comprise dans la description détaillée suivante à l'aide de formes d'exécution du tuyau de douche, de manière non limitative, en regard des dessins sur lesquels :
Les figures 1a et 1b montrent une coupe longitudinale partielle d'une première forme d'exécution du tuyau de douche objet de l'invention dans une position ouverte et dans une position fermée sur un support mural,
la figure 2 montre deux vues tridimensionnelles de l'organe d'actionnement de la première forme d'exécution du tuyau de douche,
la figure 3 représente deux vues tridimensionnelles du clapet en forme de sphère de la première forme d'exécution du tuyau de douche,
les figures 4a et 4b représentent deux coupes longitudinales tournées de 90° du noyau du tuyau de douche de la première forme d'exécution du tuyau de douche,
les figures 5a et 5b représentent deux coupes longitudinales tournées de 90° du corps du tuyau de douche de la première forme d'exécution du tuyau de douche,
la figure 6 montre une deuxième forme d'exécution du tuyau de douche objet de l'invention en coupe longitudinale partielle,
la figure 7 montre le corps de vanne de la deuxième forme d'exécution en coupe vu de côté et de dessus,
la figure 8 représente le noyau de la vanne de la deuxième forme d'exécution vu en coupe longitudinale,
la figure 9 représente le couvercle se montant sur le côté du noyau après montage des différents éléments de la vanne et avant insertion dans le corps de la vanne de la deuxième forme d'exécution,
la figure 10 montre l'organe d'actionnement utilisé dans la deuxième forme d'exécution,
la figure 11 représente une forme d'exécution du clapet dans la deuxième forme d'exécution, et
la figure 12 montre une troisième forme d'exécution du tuyau de douche objet de l'invention en coupe longitudinale partielle.

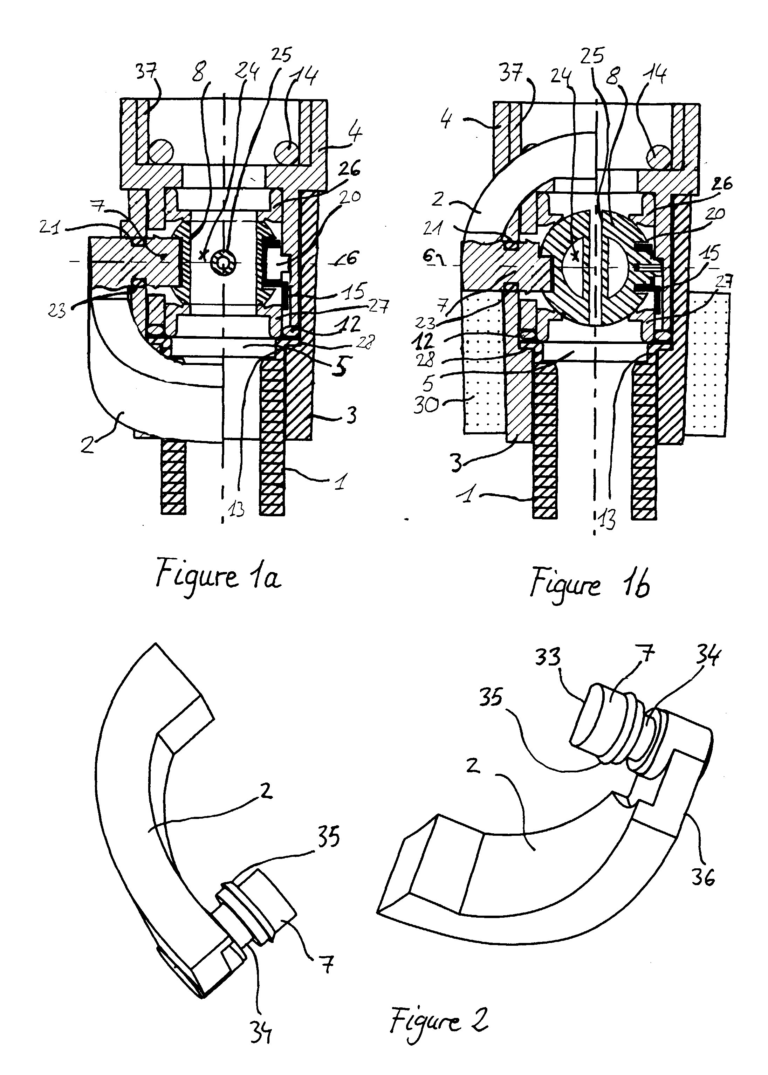

En représentation aux figures 1a et 1b, le tuyau de douche comprend une vanne à deux voies pour interrompre le flux d'eau sanitaire lorsqu'on prend une douche. L'arrêt de l'écoulement s'opère au moment où l'on insère la vanne dans un support mural 30 ayant un logement aux dimensions intérieures correspondantes aux dimensions extérieures du corps 3 de ladite vanne afin d'économiser l'eau. L'interruption peut être complète ou partielle en fonction de certaines normes qui exigent que subsiste au moins un faible écoulement d'eau lors d'une interruption volontaire de l'eau de douche.

Le tuyau de douche comprend un flexible 1 connecté à une de ses extrémités à des moyens d'alimentation en eau sanitaire, non visible sur les figures 1a et 1b, et à son autre extrémité à ladite vanne.

La vanne est composée d'un corps 3, d'un noyau 4 logé en partie dans le corps, d'un clapet rotatif 8 logé dans le noyau 4 et à l'intérieur du corps 3, d'un organe d'actionnement 2 hors du corps relié par une tige 7 au clapet pour le manoeuvrer en rotation selon un axe de rotation perpendiculaire au conduit 5 d'écoulement d'eau du noyau 4, d'un ressort de rappel 15 amenant le clapet 8 et l'organe d'actionnement 2 dans une position de repos, c'est-à-dire une position d'ouverture du conduit 5.

Le corps de la vanne 3 est fixement rattaché à l'embout dudit flexible. Pour cette connexion, on procède par exemple, avant l'insertion du noyau 4 avec ses éléments dans le corps de vanne 3, en plaçant l'extrémité du flexible 1 dans une embouchure tubulaire de section circulaire d'extrémité du corps 3 dont le diamètre intérieur est légèrement plus grand que le diamètre extérieur du flexible, ensuite on enfonce à force un tube à rebords 13 depuis l'intérieur du corps afin de solidariser l'extrémité du flexible avec le corps de vanne. L'emboutissage dudit tube 13 à l'intérieur du flexible repousse les parois du flexible contre la surface intérieure de l'embouchure du corps. Les rebords du tube prennent appui sur une partie intérieure à rebord 28 du corps 3 faisant suite à l'embouchure, de façon à ce que le corps 3 soit lié après cette opération au flexible de manière indémontable. Pour une telle opération, on utilise de préférence un corps en matière métallique, ainsi que le tube à rebords et l'extérieur du flexible.

La connexion du flexible 1 à ladite vanne peut également être réalisé en insérant tout d'abord l'extrémité du flexible 1, comprenant une partie métallique pouvant se déformer, dans l'embouchure tubulaire du corps, et ensuite en repliant vers l'extérieur par déformation plastique le col de l'extrémité du flexible 1 de façon à ce que ce repli puisse prendre appui sur une saignée intérieure audit corps 3 en prolongement de l'embouchure. Le flexible 1 pouvant coulisser dans l'embouchure même après cette opération de pliage, mais étant empêché de ressortir du côté de la sortie de l'embouchure. La fixation définitive du flexible 1 à ladite vanne est réalisée par l'insertion à force du noyau 4 avec tous ses éléments dans le corps 3. De ce fait la vanne est intimement liée au flexible.

Le noyau 4 avec tous les autres éléments de la vanne sont introduits en partie dans le corps 3 qui a une forme intérieure tronconique ou cylindrique, par exemple, après la fixation du corps 3 au flexible 1. La surface extérieure du noyau est également de forme tronconique ou cylindrique correspondante à celle intérieure du corps. Le noyau 4 peut être enfoncé à force dans le corps 3 pour qu'il soit également logé dans ledit corps de manière indémontable, mais on pourrait concevoir le maintien du noyau 4 dans le corps 3 par une fixation à vis ou par collage ou par soudage ou par des moyens équivalents. Un joint d'étanchéité élastique 12 en forme d'anneau ou en forme de cylindre avec un bourrelet extérieur est pressé entre le fond du corps et l'extrémité intérieure du noyau pour empêcher des fuites de l'eau entrant dans le conduit 5.

Le noyau 4 est conçu de préférence en matériau plastique de façon à pouvoir être obtenu par moulage. Si on souhaite le fabriquer en matériau métallique comme le corps 3 dans lequel il sera monté, on peut penser le réaliser par frittage de poudres métalliques ou par laminage ou par tournage.

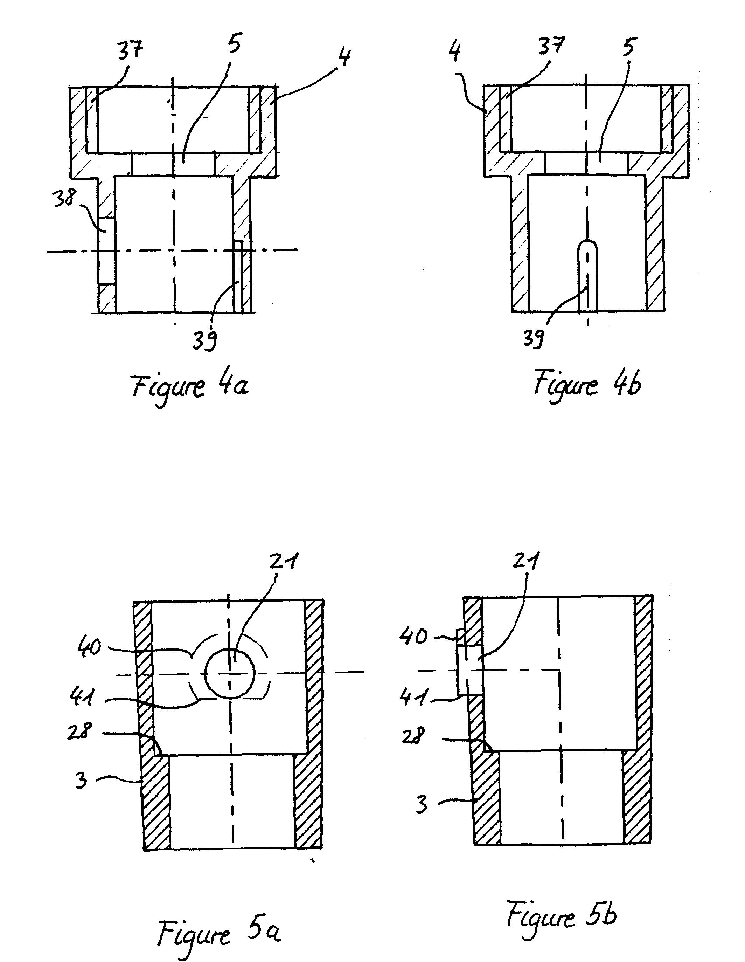

Le noyau 4 de la vanne, visible également aux figures 4a et 4b, est en partie logé dans le corps 3, c'est-à-dire que la partie du noyau 4 comprenant les éléments essentiels de la vanne sont à l'intérieur du corps, tandis que la partie extérieure du noyau comprend un rebord qui s'appuie, après insertion du noyau 4 dans le corps 3, sur le col du corps. L'extrémité extérieure dudit noyau 4 est constituée d'un pas de vis intérieur 37 afin de pouvoir visser un manche de pomme de douche non visible sur les figures 1a et 1b. D'autres moyens de connexion entre le noyau 4 et le manche de la pomme de douche sont envisageables. Il est prévu au fond du taraudage du noyau un joint d'étanchéité annulaire de forme toroïdale 14 se comprimant après avoir vissé la pomme de douche.

Un trou 38 est pratiqué sur le noyau 4 dans sa partie tronconique ou cylindrique intérieure au corps 3 pour le passage sans contact de la tige 7 de l'organe d'actionnement. Sur la surface opposée à ce trou 38, une rainure verticale 39 non traversante débutant par un demi-cercle et se terminant à l'extrémité inférieure du noyau 4 sert de guidage en rotation du clapet 8 et également de butée pour une extrémité d'un ressort de rappel 15 du clapet.

Le conduit 5 du noyau 4 est disposé selon un axe longitudinal parallèle à l'axe reliant l'entrée et la sortie de la vanne, mais de préférence cet axe est coaxial à l'axe entre l'entrée et la sortie pour laisser passer l'eau sans changement de sa direction.

Le clapet 8, visible également en figure 3, est de forme générale sphérique et est monté pivotant dans le conduit 5 selon un axe de rotation perpendiculaire à l'écoulement de l'eau. Une ouverture traversante 24 pour le passage de l'eau en position d'ouverture est pratiqué dans sa masse. Cette ouverture est par exemple de forme cylindrique ou de forme tubulaire de section transversale rectangulaire dont l'axe passe par le centre de la sphère.

Un logement 29, visible en figure 3, est prévu pour pouvoir inséré l'extrémité de la tige 7 d'un organe d'actionnement 2. Ce logement partiellement cylindrique comprend un plat pour interdire à la tige 7 de l'organe d'actionnement 2 de tourner indépendamment du clapet. Il est également concevable d'avoir un logement 29 totalement cylindrique dans lequel l'extrémité de la tige 7 peut être enfoncée à force ou simplement collée ou soudée dans le logement 29.

Un tube cylindrique 25 de petite dimension traverse le clapet 8 dans une direction perpendiculaire à l'ouverture traversante 24 afin de permettre en position de fermeture du clapet de laisser passer un filet d'eau pour une interruption partielle d'écoulement d'eau. En lieu et place de ce tube, deux petites ouvertures de part et d'autre du clapet auraient permis de remplir la même fonction que ledit tube 25. Bien entendu, si une fermeture totale du conduit est souhaitée en position de fermeture du clapet, le tube 25 ou les deux petites ouvertures peuvent être omises.

Le clapet 8 est monté dans le noyau 4 avec un ressort de rappel 15. Ce ressort 15 de torsion est logé dans une gorge annulaire 20 du clapet en opposition au logement 29. Une extrémité du ressort 15 pour son maintien est placée dans une rainure pratiquée selon le diamètre de la gorge annulaire 20 entre deux parties montantes 31 disposées à l'intérieur du ressort 15 dont les extrémités sont placées dans une rainure verticale 39 du noyau, visible aux figures 4a et 4b, pour la rotation du clapet. L'autre extrémité du ressort prenant appui dans la rainure verticale 39 du noyau. Le ressort de rappel 15 impose au clapet 8 une rotation en direction de sa position de repos, c'est-à-dire en position d'ouverture de la vanne.

Au lieu de placer comme discuté ci-dessus le ressort dans une gorge annulaire 20 située sur le clapet 8 en opposition au logement 29, ce ressort de rappel 15 peut être placé sur la tige 7 de l'organe d'actionnement 2 avec une extrémité du ressort fixée sur ladite tige 7 et l'autre extrémité prenant appui contre une butée réalisée en prolongement à une ouverture 21 de passage de la tige 7.

Lors du montage, le clapet 8 est introduit dans le corps 3 de la vanne avec le noyau 4. Deux joints annulaires cylindriques 26 et 27 ayant chacun un prolongement intérieur de contact avec le clapet insèrent de part et d'autre le clapet 8. Ces deux joints 26 et 27 sont parallèles entre eux et coaxiaux à l'axe du conduit 5. Le diamètre intérieur de chaque prolongement des joints est supérieur ou égal à celui de l'ouverture 24 du clapet 8.

Les joints 26 et 27 doivent être conçus dans un matériau relativement rigide, mais supportant des déformations élastiques lors de l'insertion du noyau 4 dans le corps 3. En position d'ouverture du clapet, ils s'appuient sur un plat circulaire 32 du clapet. Les joints 26 et 27 peuvent être réalisés par exemple en polyamide mélangé à du Téflon lubrifié. Ils sont en contact avec le clapet 8 en position d'ouverture ou de fermeture sur une portion circulaire du clapet 8 empêchant des fuites d'eau en direction de l'organe d'actionnement 2. Le clapet 8, quant à lui, est conçu dans un matériau plastique glissant sur le matériau des joints 26 et 27.

Lors du passage de la position d'ouverture à la position de fermeture du clapet 8 à 90° de la position d'ouverture, l'ouverture traversante 24 laisse passer l'eau dans un logement intercalaire entre les joints 26 et 27 et l'intérieur du noyau 4, mais est stoppée par un joint annulaire 23 logée dans une gorge 34 de la tige 7 pressé contre l'ouverture 21 de passage de la tige 7 de l'organe d'actionnement 2.

Par contre en position de fermeture, l'eau ne peut passer qu'à travers le tube 25, car les prolongements des joints 26 et 27 en contact avec une portion circulaire du clapet empêche l'eau de passer par l'ouverture traversante 24.

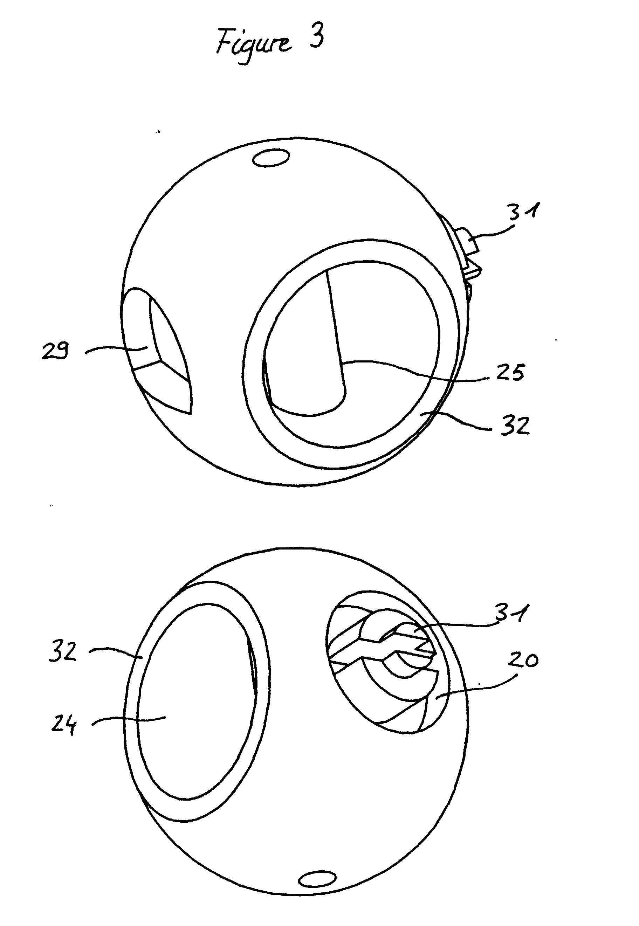

L'organe d'actionnement 2, visible à la figure 2, est conformé de telle sorte qu'il ne puisse tourner qu'entre deux positions extrêmes, à savoir une position d'ouverture et une position de fermeture disposée à 90° de la position d'ouverture. En vue de dessus, il décrit un quart de cercle dont l'extrémité libre vient en butée contre la surface extérieure du corps 3. La tige 7 est venu de matière avec le levier externe au corps de l'organe d'actionnement 2. Un méplat 33 sur la surface cylindrique de la partie intérieure de la tige sert à l'insérer dans un logement 29 du clapet afin qu'il n'y ait pas de glissement lors de la rotation du clapet. Une saillie 35 est pratiquée sur la tige 7 pour empêcher de retirer l'organe d'actionnement hors de l'ouverture de passage 21 après son insertion dans le logement 29 du clapet 8. A proximité de la tige, un plat 36 est réalisé sur l'organe d'actionnement 2 pour venir en appui sur le col d'un support de douche 30 après l'avoir fait tourner dans la position de fermeture lors de l'introduction de la vanne du tuyau sur ledit support.

Aux figures 5a et 5b, le corps 3 de la vanne est de forme générale extérieure tronconique afin de pouvoir être inséré et maintenu par coincement dans le support mural tout en ayant imposé une rotation de l'organe d'actionnement 2 en position de fermeture. Une ouverture de passage 21 dans une direction perpendiculaire à la direction d'écoulement de l'eau est pratiquée dans le corps 3 vers sa partie supérieure. Un renforcement semi-annulaire 40 centré sur l'ouverture 21 est réalisé sur la surface extérieure du corps 3. Un plat inférieur 41 de ce renforcement 40 sert de soutien contre le col du support mural 30 à la hauteur du plat 36 de l'organe d'actionnement 2 en position de fermeture.

Selon une autre forme d'exécution non représentée dans les figures, le clapet peut être de forme cylindrique dont l'axe longitudinal est confondu avec son axe de rotation. La tige de l'organe d'actionnement vient se fixer dans un logement de forme équivalente à ce qui vient d'être décrit ci-devant. Une ouverture traversante est entourée par des joints d'étanchéité de chaque côté du clapet pressé contre des portions autour de l'ouverture traversante lors de l'insertion du noyau dans le corps. En position de fermeture du clapet l'ouverture traversante se trouvant dans une position perpendiculaire au conduit de la vanne, de faibles passages d'eau subsistent au niveau desdites ouvertures et du conduit afin de pouvoir éviter de créer deux petites ouvertures d'axe perpendiculaire à l'ouverture traversante.

Selon une autre forme d'exécution non représentée sur les figures, l'organe d'actionnement comprend un levier externe en demi-lune fixé en rotation de chaque côté de l'axe de rotation du clapet. Le levier peut occuper deux positions extrêmes correspondant aux positions ouverte et fermée du clapet. En position de fermeture, le levier est introduit dans une ouverture du corps de forme analogue au levier, ce qui permet d'introduire le corps avec le levier dans son ouverture intégralement dans le support mural.

Le tuyau de douche est utilisé en collaboration avec un support mural de façon à le suspendre à une certaine hauteur pendant que l'on se savonne. L'insertion dans ledit support impose à la vanne de se fermer partiellement ou complètement et ainsi éviter une consommation d'eau exagérée.

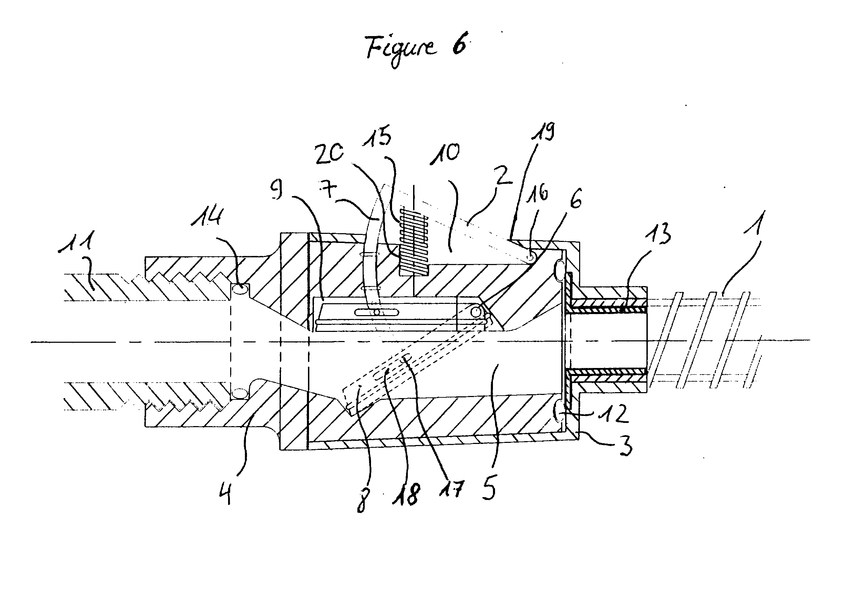

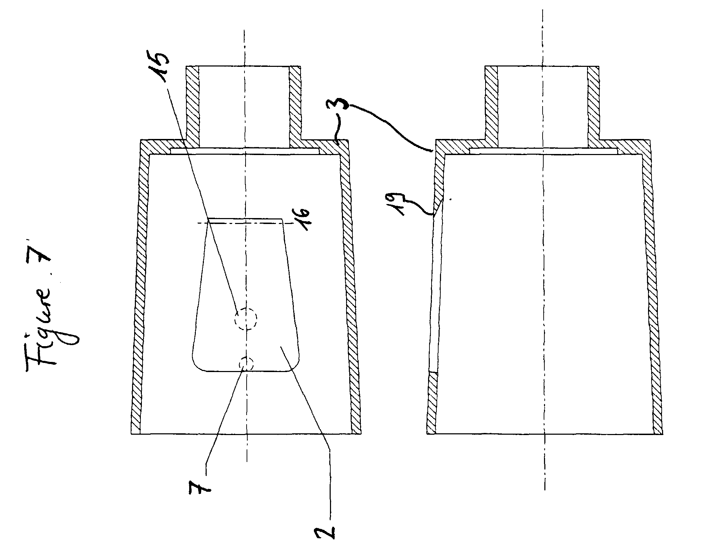

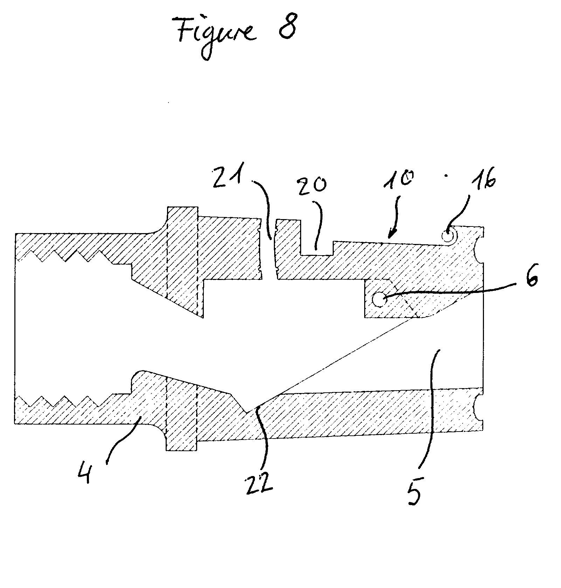

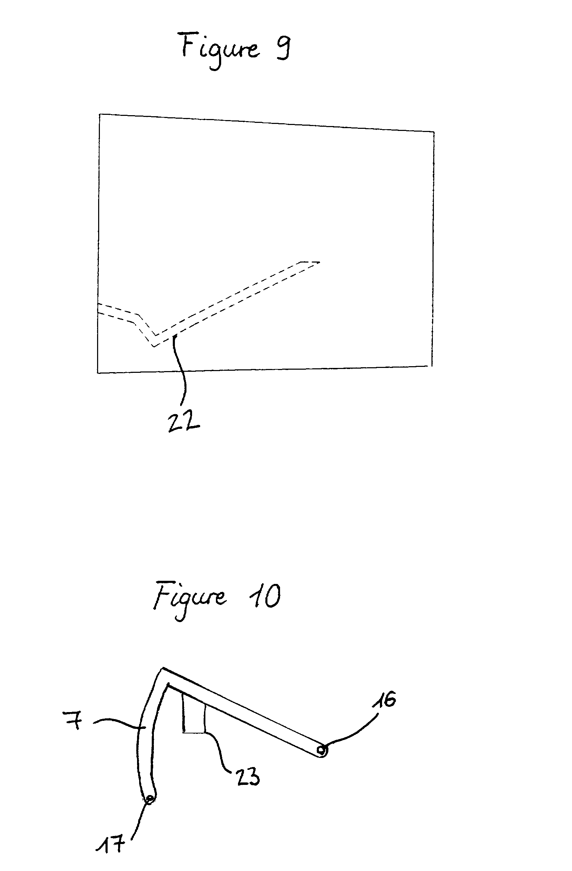

Les figures 6 à 11 montrent une deuxième forme d'exécution du tuyau de douche. Les mêmes éléments de cette deuxième forme d'exécution portent les mêmes signes de référence que pour la première forme d'exécution.

Le noyau 4 avec tous les autres éléments de la vanne sont introduits dans le corps 3 qui a une forme pyramidale tronquée ou tronconique après la fixation du corps 3 au flexible 1. La surface extérieure du noyau 4 est également de forme pyramidale tronquée ou tronconique correspondante à celle du corps 3. Le noyau 4 peut être enfoncé à force, comme pour la première forme d'exécution, dans le corps 3 pour qu'il soit également logé dans ledit corps 3 de manière indémontable, mais on pourrait concevoir le maintien du noyau 4 dans le corps 3 par une fixation à vis ou des moyens équivalents, dans le cas où le flexible 1 est lié uniquement intimement au corps 3 de la vanne par exemple. Une gorge annulaire est pratiquée à l'extrémité du noyau 4 venant en contact avec le fond du corps 3. Un joint d'étanchéité 12 en forme d'anneau est logé entre le fond du corps 3 et la gorge annulaire.

Comme pour la première forme d'exécution, le noyau 4 est conçu de préférence en matériau plastique de façon à pouvoir être obtenu par moulage, mais on peut également le fabriquer en matériau métallique, par exemple par frittage de poudres métalliques, comme le corps 3 dans lequel il est monté.

Le noyau 4 de la vanne est en partie logé dans le corps 3, c'est-à-dire que la partie du noyau 4 comprenant les éléments essentiels de la vanne sont à l'intérieur du corps 3, la partie extérieure du noyau 4 comprend un rebord qui s'appuie, après insertion du noyau 4 dans le corps 3, sur le col du corps. L'extrémité extérieure dudit noyau 4, de longueur suffisante pour ne pas gêner sa manipulation, est constituée d'un pas de vis intérieur afin de pouvoir vissé un manche 11 de pomme de douche. D'autres moyens de connexion entre le noyau 4 et le manche 11 de la pomme de douche sont envisageables. Il est prévu au fond du taraudage du noyau un joint d'étanchéité 14.

La vanne est constituée dudit corps 3, du noyau 4 traversé par un conduit longitudinal 5 de façon à garantir un écoulement de l'eau dans une même direction qu'à l'entrée et la sortie de la vanne. Ce conduit 5 est disposé selon un axe longitudinal parallèle à l'axe reliant l'entrée et la sortie de la vanne, mais on aurait pu concevoir que le conduit 5 soit coaxial à l'entrée et à la sortie. Un clapet 8 est monté pivotant, c'est-à-dire tournant autour d'un axe perpendiculaire à l'axe longitudinal, dans le conduit 5 du noyau et s'ouvre du côté de la pomme de douche. L'axe de rotation 6 dudit clapet 8 se trouve dans un logement intérieur 9 du noyau 4 en dessus du conduit. Un organe d'actionnement mécanique 2 du clapet est un levier 2 dont l'axe de rotation 16 se trouve en dessous du bord d'une ouverture du corps du côté du flexible. L'extrémité du levier opposée à l'axe de rotation est une tige en forme d'arc de cercle 7 centré sur l'axe de rotation dudit levier. Cette tige passe dans un passage curviligne 21 correspondant pratiqué dans une partie supérieure du noyau pour que son extrémité libre puisse actionner par le dessus le clapet lors d'une commande de fermeture de la vanne. Des garnitures d'étanchéité sont prévues entre la tige et le passage.

Le bord 19 de l'ouverture du corps sous lequel se trouve l'axe de rotation 16 du levier comprend une lèvre servant de butée pour le levier afin de définir une position extrême en position de repos du levier. Cette lèvre n'est pas forcément nécessaire si l'extrémité libre de la tige est reliée au clapet, car dans ce cas la position extrême du levier est définie lorsque le clapet est dans son logement comme il sera décrit ci-après. Lorsque le levier 2 est pressé, il pousse le clapet en direction de son siège 22 dans le conduit 5 ou simplement contre la paroi du conduit. La surface de contact du clapet peut être plus grande que l'ouverture définie par le siège de clapet de façon à ce qu'il ferme complètement le conduit en appui sur le pourtour du siège.

Dans certains cas et selon certaines normes, il est souhaitable que le clapet ne ferme pas complètement le conduit de façon à laisser passer un filet d'eau en position de fermeture partielle du conduit. Deux possibilités sont envisageables pour ne pas interrompre complètement l'écoulement d'eau. D'une part, on peut prévoir que la tige du bouton ou du levier soit dimensionnée pour ne pas permettre de pousser le clapet en position de fermeture complète du conduit lorsque le bouton ou le levier est complètement pressé. D'autre part, on peut réaliser un clapet ayant au moins une ouverture traversante pour qu'en position de fermeture complète du clapet contre son siège, un filet d'écoulement d'eau subsiste.

Le clapet 8 en position de fermeture occupe une position inclinée dans le conduit 5, c'est-à-dire que l'angle entre le fond du logement intérieur 9 du noyau 4 et le clapet 8 est un angle aigu. L'axe de rotation 6 du clapet 8 se trouve entre la tige 7 du levier et la connexion du corps 3 au flexible 1 à l'extrémité du logement intérieur 9.

La surface venant en contact avec le siège de clapet peut être revêtue d'une couche en élastomère favorisant une meilleure fermeture du conduit. De plus une garniture d'étanchéité peut être placée sur la périphérie du clapet.

L'extrémité libre 17 de la tige 7 du levier est logée dans une cavité 18 de forme oblongue pratiquée sur la surface supérieure du clapet lui permettant un mouvement dans le sens de la longueur de la cavité. Au moins une fente de longueur correspondante à la longueur de la cavité est réalisée sur un des côtés du clapet afin de pouvoir solidariser par une goupille 17 insérée à l'extrémité de la tige et par la fente du clapet le levier au clapet pour que le clapet suive tous les mouvements dudit levier.

Sans action sur le levier 2, le clapet 8 est repoussé dans son logement intérieur 9 du noyau 4 par la force de l'eau. Dans le cas où le levier est poussé par un ressort de rappel 15 logé entre une cavité 20 de la partie supérieure du noyau et une protubérance 23 sous le levier vers sa position de repos à savoir vers l'extérieur du corps, le clapet suivra le mouvement du levier s'il est relié à l'extrémité de la tige. Il est également possible que le clapet ne soit pas relié à la tige du levier. Dans ce cas, il sera automatiquement repoussé par le flux d'eau dans son logement du noyau.

Un logement supérieur 10 du noyau permet de loger le levier complètement ou partiellement lors de la commande de fermeture de la vanne.

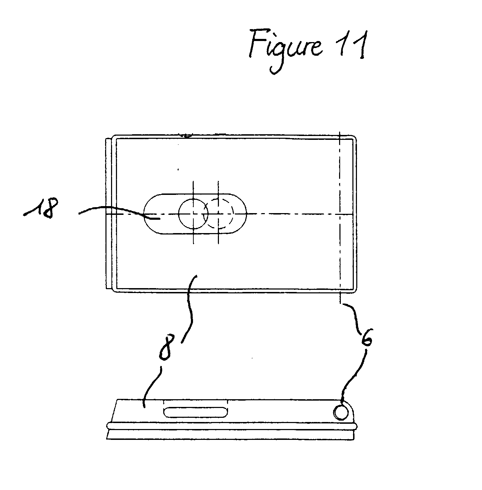

Comme représenté en figure 11, le clapet 8 est de section longitudinale rectangulaire. Le conduit 5 à l'intérieur du noyau est donc constitué de quatre parois disposées perpendiculairement l'une par rapport à l'autre, la paroi supérieure dudit conduit comprenant le logement intérieur 9 du clapet. Avec sa garniture d'étanchéité sur sa périphérie, le clapet glisse le long des parois latérales jusqu'à venir en contact avec son siège lorsqu'il est poussé par la tige du levier. Une forme elliptique dudit clapet pourrait être envisagée avec un siège de clapet correspondant à cette forme elliptique, mais cette configuration est plus délicate à réaliser, car il faudrait un conduit dont la section transversale soit en forme de U.

Le noyau 4 est fabriqué en deux parties. Dans une première forme de réalisation, vue sur les figures, une première partie principale dans laquelle sont réalisés le conduit 5, l'extrémité filetée, les logements intérieur 9 et extérieur 10, et les cavités pour loger les axes de rotation du clapet et du levier. La deuxième partie n'est qu'un couvercle visible en figure 4 afin de fermer le conduit 5, et donc le noyau, lorsqu'on y a logé le clapet 8 et le levier 2. Le couvercle peut comprendre une des cavités pour chacun des axes de rotation, afin qu'une fois le noyau fermé, le levier et le clapet puisse pivoter autour de leur axe. Les axes de rotation du levier et du clapet peuvent venir de matière avec chacun de ces éléments et être insérées à force dans lesdites cavités, mais on peut prévoir qu'ils sont insérés après le placement du levier et du clapet entre leurs cavités correspondantes. Dans le cas où on souhaite adjoindre un ressort de rappel 15 au levier, on le place après que l'axe de rotation du levier soit entre ses cavités.

Dans une autre forme de réalisation du noyau 4, non visible sur les figures, on aurait pu concevoir deux parties complémentaires de dimensions équivalentes par moulage dont chacune comprend une moitié du conduit 5, et on réunit par la suite les deux parties en y incorporant le clapet 8 et l'organe d'actionnement 2. Cette seconde façon de réalisation du noyau 4 simplifie le montage des éléments.

Dans cette deuxième forme d'exécution, une fois que tous les éléments du noyau 4 sont placés, ainsi que le couvercle de fermeture, qui peut être collé par exemple à la première partie du noyau 4, on introduit à force le noyau 4 dans le corps 3 afin qu'il soit maintenu fixement dans ledit corps 3. Lors de l'insertion du noyau 4 dans le corps 3, le levier 2 s'abaisse dans le logement extérieur du noyau 4 et se déploie une fois inséré.

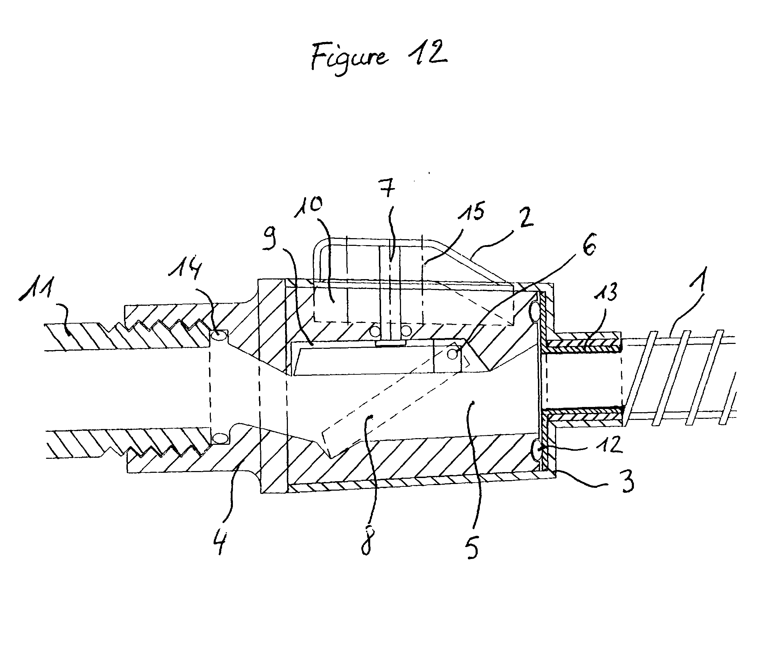

La figure 12 représente une troisième forme d'exécution du tuyau objet de l'invention. Les mêmes signes de référence désignant des éléments similaires à ceux des première et deuxième formes d'exécution sont utilisés. De ce fait, la description de cette troisième forme d'exécution ne sera faite que pour expliquer la différence entre les deux autres formes d'exécution présentées.

L'organe d'actionnement 2 constitue la grande différence. Dans cette forme, l'organe d'actionnement est un bouton-poussoir 2 lié fixement à une tige 7 agissant transversalement par rapport à l'axe longitudinal dudit tuyau. La tige 7 passe par un passage perpendiculaire à l'axe longitudinal du conduit 5 avec des garnitures d'étanchéité. Un ressort de rappel 15 peut être utilisé pour ramener le bouton à sa position de repos à savoir vers l'extérieur du corps. Dans ce cas, il est nécessaire que l'extrémité libre de la tige soit dotée d'une butée à l'intérieur du noyau afin de pouvoir définir une position extrême déterminée du bouton. Mais comme pour la première forme d'exécution du tuyau présentée ci-dessus, l'extrémité intérieur de la tige aurait pu être reliée au clapet pour qu'il suive les mouvements dudit bouton.

Le bouton comprend une rampe sur sa surface supérieure prenant naissance proche du bord de l'ouverture du corps du côté du flexible. Cette rampe servira à pousser le bouton avec sa tige vers l'intérieur du noyau lorsqu'on insérera le corps de vanne dans un support mural de douche afin que le clapet soit poussé en direction de son siège par la tige du bouton pour interrompre partiellement ou complètement l'écoulement de l'eau.

Dans cette troisième forme d'exécution, l'extrémité libre de la tige est montrée sans connexion dans une cavité oblongue du clapet 8. Le clapet 8 est donc repoussé par le flux d'eau dans son logement intérieur 9 en position de repos du bouton 2. De plus, la tige 7 est montée en deux parties pour faciliter le montage dans le corps 3 de vanne.

Une quatrième forme d'exécution du tuyau de douche au niveau de la vanne, non représentée sur des figures, consiste à prévoir un clapet de forme sphérique ou demi-sphérique fixé à un bout de tige articulé à l'extrémité inférieure d'une tige liée au levier ou au bouton, l'axe d'articulation étant perpendiculaire au flux d'eau de façon à ce que la sphère ou la demi-sphère, lorsque le levier ou le bouton est pressé, soit poussée contre la sortie du conduit par le flux d'eau afin de l'obstruer partiellement ou complètement. Dans ce cas, l'articulation se trouve située en dessous de la paroi du logement intérieur pour permettre le pivotement du clapet. En position de repos, le levier ou le bouton est poussé vers l'extérieur par un ressort de rappel, ce qui permet au clapet de libérer la sortie du conduit, l'articulation entre le bout de tige et la tige se trouvant dans ce cas au-dessus de la paroi du logement intérieur du clapet.

Le diamètre de la sortie du conduit peut être inférieur au diamètre de la sphère ou de la demi-sphère ou légèrement supérieur si on désire obstruer partiellement le conduit.

Le bout de la tige et la tige peuvent être rectilignes, ce qui oblige, si on utilise un levier, de pratiquer un logement à l'extrémité libre du levier comme il était question dans le cas du clapet. Si le bout de tige et la tige sont de forme curviligne comme le passage à l'intérieur duquel ils passent, l'extrémité du levier peut être fixé rigidement à la tige.

Le passage pratiqué dans la partie supérieure du noyau pour le bout de tige et la tige est agencé également avec une garniture d'étanchéité. La pose de cette garniture peut se faire avant l'insertion du noyau dans le corps. Dans ce cas, on peut prévoir que la garniture est placée dans une rainure pratiquée sur la partie supérieure du noyau et ensuite bloquée dans sa rainure annulaire par une plaquette supplémentaire s'insérant avec le noyau dans le corps

Lorsque l'on prend une douche, le tuyau de douche est inséré dans un support mural pour le maintenir et permettre à la vanne de se fermer au moins partiellement pour économiser l'eau.

Pour les deuxième troisième et quatrième formes d'exécution du tuyau de douche de préférence, ledit support mural, non représenté sur des figures, peut être constitué d'un pied avec une plaque de base pour la fixation à un mur d'une salle de bain, notamment à l'aide de vis, d'une pièce avec un logement pour le corps 3 de vanne et d'une rotule entre la pièce et le pied de façon à orienter à souhait la position de ladite pièce. Le logement a une forme intérieure correspondante à la forme extérieure du corps 3 de vanne, notamment une forme pyramidale tronquée ou tronconique.

Sur le devant du logement, une fente est pratiquée sur toute la longueur, laissant le passage au flexible du tuyau avant l'insertion du corps de vanne dans le logement. Si le logement du support est de section transversale carrée comme le corps de vanne, on pourrait choisir d'insérer la vanne de façon à ce que l'organe ne soit pas pressé au cas où on souhaite que l'écoulement de l'eau ne soit pas interrompu.

Le support peut comprendre également sur le côté une ouverture prenant naissance de la partie haute dudit logement et se terminant en dessus de l'extrémité inférieure dudit logement, une languette étant montée à coulissement dans ladite ouverture afin de pouvoir être retirée manuellement vers le haut et ainsi permettre d'insérer le corps de vanne sans pression sur le bouton ou le levier pour prendre une douche sans interruption de l'écoulement de l'eau. Une poche pour loger la languette retirée de l'ouverture est prévue sur l'extérieur dudit logement, notamment à l'opposé de ladite ouverture.

Dans le cas où la forme tronconique est préconisée pour l'intérieur du logement, il est nécessaire de prévoir des guides afin d'insérer le corps 3 de vanne sans pression sur l'organe d'actionnement 2 si cela n'est pas souhaité.

Il est bien clair que de multiple formes d'exécution peuvent être réalisées selon le concept de l'invention sans sortir du cadre des revendications.

## Revendications

1. Tuyau de douche destiné à être connecté par une de ses extrémités à des moyens d'alimentation en eau sanitaire et par son autre extrémité à un manche d'une pomme de douche, constitué d'un flexible et d'une vanne à deux voies qui comprend un corps à l'intérieur duquel est logé une partie d'un noyau traversé par un conduit longitudinal reliant l'entrée et la sortie de la vanne pour le passage de l'eau, caractérisé en ce que la vanne est reliée de façon indémontable à l'extrémité du flexible côté pomme de douche, en ce que ladite vanne comprend un clapet pivotant à l'intérieur du conduit du noyau dont l'axe de rotation est perpendiculaire à la direction d'écoulement de l'eau, un organe d'actionnement mécanique du clapet pour placer ledit clapet dans le conduit du noyau dans une position de fermeture partielle ou complète lors d'une commande d'interruption partielle ou complète d'écoulement de l'eau, en position de repos de l'organe d'actionnement l'eau pouvant passer librement au travers du conduit du noyau entre l'entrée et la sortie de la vanne, le tuyau de douche au niveau de la vanne étant destiné à être inséré en utilisation dans un logement d'un support mural de douche dont les dimensions intérieures correspondent aux dimensions extérieures du corps de ladite vanne afin d'imposer à l'organe d'actionnement un mouvement vers l'intérieur plaçant le clapet en position de fermeture partielle ou complète pour interrompre partiellement ou complètement l'écoulement de l'eau.

2. Tuyau de douche destiné à être connecté par une de ses extrémités à des moyens d'alimentation en eau sanitaire et par son autre extrémité à un manche d'une pomme de douche, constitué d'un flexible et d'une vanne à deux voies qui comprend un corps à l'intérieur duquel est logé une partie d'un noyau traversé par un conduit longitudinal reliant l'entrée et la sortie de la vanne pour le passage de l'eau, caractérisé en ce que la vanne est reliée de façon indémontable à l'extrémité du flexible côté pomme de douche, en ce que ladite vanne comprend un clapet pivotant à l'intérieur du conduit du noyau selon un axe de rotation perpendiculaire à la direction d'écoulement de l'eau, ledit clapet comprenant dans sa masse une ouverture traversante pour le passage de l'eau dans une position d'ouverture, un organe d'actionnement mécanique du clapet pour tourner ledit clapet dans le conduit du noyau dans une position de fermeture partielle ou complète lors d'une commande d'interruption partielle ou complète d'écoulement de l'eau, en position de repos de l'organe d'actionnement l'eau pouvant passer librement au travers du conduit du noyau entre l'entrée et la sortie de la vanne par l'ouverture traversante du clapet, le tuyau de douche au niveau de la vanne étant destiné à être inséré en utilisation dans un logement d'un support mural de douche dont les dimensions intérieures correspondent aux dimensions extérieures du corps de ladite vanne afin d'imposer à l'organe d'actionnement un mouvement de rotation pour faire tourner le clapet dans une position de fermeture partielle ou complète pour interrompre partiellement ou complètement l'écoulement de l'eau.

3. Tuyau selon l'une des revendications 1 et 2, caractérisé en ce que l'organe d'actionnement est poussé vers la position de repos par un ressort de rappel.

4. Tuyau selon la revendication 2, caractérisé en ce que l'organe d'actionnement est relié fixement au clapet par une tige, un levier arqué de l'organe d'actionnement venant en butée sur la surface extérieure du corps dans la position de fermeture et d'ouverture.

5. Tuyau selon l'une des revendications 2 et 4, caractérisé en ce que le levier de l'organe d'actionnement est conformé de telle manière que la position extrême de fermeture est décalée de 90° de la position extrême d'ouverture.

6. Tuyau selon l'une des revendications 2, 4 et 5, caractérisé en ce que le clapet est de forme générale sphérique, l'axe longitudinal de l'ouverture traversante pour le passage de l'eau passant par le centre de la sphère et étant perpendiculaire à l'axe de rotation du clapet.

7. Tuyau selon l'une des revendications 2, 4 et 5, caractérisé en ce que le clapet est de forme générale cylindrique dont l'axe longitudinal est confondu avec l'axe de rotation du clapet, l'axe longitudinal de l'ouverture traversante pour le passage de l'eau croisant perpendiculairement l'axe de rotation.

8. Tuyau selon l'une des revendications 2, 4 à 8, caractérisé en ce que le clapet comprend deux ouvertures coaxiales débouchant dans l'ouverture traversante dans une direction perpendiculaire à l'axe longitudinal de l'ouverture traversante pour laisser passer un faible écoulement de l'eau en position de fermeture du clapet.

9. Tuyau selon la revendication 8, caractérisé en ce que les deux ouvertures coaxiales sont reliées dans l'ouverture traversante par un tube de guidage de l'eau.

10. Tuyau selon la revendication 2, caractérisé en ce que deux joints annulaires semi-rigides coaxiaux au conduit d'écoulement de l'eau sont pressés par le noyau de part et d'autre contre le clapet, le diamètre intérieur de chaque joint étant supérieur ou égal au diamètre de l'ouverture traversante pour permettre à l'eau de ne passer que par l'ouverture traversante en position d'ouverture, et d'empêcher l'eau de passer par ladite ouverture traversante en position de fermeture.

11. Tuyau selon la revendication 1, caractérisé en ce que l'organe d'actionnement est un bouton-poussoir à mouvement transversal passant au travers d'une ouverture supérieure du corps, ledit bouton étant fixement relié à une tige traversant un passage rectiligne pratiqué dans une partie supérieure du noyau avec des garnitures d'étanchéité et débouchant dans le conduit de passage de l'eau au-dessus du clapet, l'extrémité libre intérieure de la tige étant munie d'une butée ou étant reliée au clapet pour qu'en position de repos le bouton puisse occuper une position extrême déterminée vers l'extérieur du corps de vanne, et en ce que le noyau comprend un logement extérieur en dessous de l'ouverture du corps pour loger en partie ou complètement le bouton-poussoir lorsqu'il pousse le clapet en position de fermeture partielle ou complète.

12. Tuyau selon la revendication 11, caractérisé en ce qu'au moins une partie de la surface supérieure du bouton-poussoir constitue une rampe débutant à fleur du corps côté flexible en position de repos afin de permettre au bouton d'être pressé lors de l'insertion du tuyau de douche dans le support mural.

13. Tuyau selon la revendication 1, caractérisé en ce que l'organe d'actionnement est un levier à axe de rotation placé en dessous d'une ouverture supérieure du corps et du côté du flexible, l'extrémité libre du levier étant munie d'une tige en forme d'arc de cercle, dont le centre est sur l'axe de rotation, passant au travers d'un passage curviligne correspondant pratiqué dans une partie supérieure du noyau avec des garnitures d'étanchéité et débouchant dans le conduit de passage de l'eau au-dessus du clapet pour le pousser dans une position de fermeture partielle ou complète.

14. Tuyau selon la revendication 13, caractérisé en ce que l'extrémité libre intérieure de la tige est munie d'une butée ou est reliée au clapet pour qu'en position de repos le levier puisse occuper une position extrême déterminée vers l'extérieur du corps de vanne.

15. Tuyau selon la revendication 13, caractérisé en ce que le bord de l'ouverture du corps en dessus de l'axe de rotation du levier constitue une butée pour ledit levier afin de définir une position extrême dudit levier en position de repos.

16. Tuyau selon la revendication 1, caractérisé en ce que l'axe de rotation du clapet se trouvant à une de ses extrémités côté flexible se situe dans un logement intérieur de la partie supérieure du noyau entre la tige du bouton ou du levier et la connexion avec le flexible afin qu'en position de repos lors du passage de l'eau le clapet puisse être poussé par l'eau ou tiré par la tige dans le logement intérieur du noyau.

17. Tuyau selon la revendication 16, caractérisé en ce que le clapet en appui contre son siège occupe une position inclinée définissant un angle aigu par rapport au fond du logement intérieur du noyau.

18. Tuyau selon l'une des revendications 11, 13 et 14, caractérisé en ce que l'extrémité de la tige du bouton ou du levier actionnant le clapet est maintenue dans une cavité de forme oblongue du clapet libre de mouvement dans le sens de la longueur du clapet afin que le clapet suive les mouvements du bouton ou du levier.

19. Tuyau selon la revendication 1, caractérisé en ce que le clapet comprend au moins une ouverture traversante pour qu'en position de fermeture complète du clapet contre un siège de clapet, un filet d'eau puisse passer au travers de l'ouverture.

20. Tuyau selon la revendication 1, caractérisé en ce que le clapet est de section longitudinale rectangulaire, et en ce que le conduit à l'intérieur du noyau est constitué de quatre parois disposées perpendiculairement l'une par rapport à l'autre, la paroi supérieure dudit conduit comprenant le logement du clapet.
